Europäisches Patentamt

European Patent Office

Office européen des brevets

(11) Numéro de publication : **0 365 408 B1**

(12) **FASCICULE DE BREVET EUROPEEN**

(45) Date de publication du fascicule du brevet :
23.12.92 Bulletin 92/52

(51) Int. Cl.⁵ : **F16H 21/44, G10K 11/00**

(21) Numéro de dépôt : **89402834.9**

(22) Date de dépôt : **13.10.89**

(54) **Mécanisme du type bras articulé, et antenne de sonar équipée d'un tel mécanisme.**

(30) Priorité : **21.10.88 FR 8813831**

(43) Date de publication de la demande :
**25.04.90 Bulletin 90/17**

(45) Mention de la délivrance du brevet :
**23.12.92 Bulletin 92/52**

(84) Etats contractants désignés :
**DE GB IT**

(56) Documents cités :
**DE-A- 2 249 761**
**DE-A- 2 406 274**
**US-A- 3 886 491**

(73) Titulaire : **THOMSON-CSF**
**51, Esplanade du Général de Gaulle**
**F-92800 Puteaux (FR)**

(72) Inventeur : **Warnan, François**
**THOMSON-CSF SCPI Cédex 67**
**F-92045 Paris la Défense (FR)**
Inventeur : **Barbot, Joel**
**THOMSON-CSF SCPI Cédex 67**
**F-92045 Paris la Défense (FR)**

(74) Mandataire : **Courtellemont, Alain et al**
**THOMSON-CSF SCP B.P. 329**
**F-92402 COURBEVOIE CEDEX (FR)**

**Description**

La présente invention concerne un mécanisme, utilisable en particulier pour une antenne de sonar, comportant un support, un bras, une bielle, le bras et la bielle étant mobiles dans des plans parallèles, un dispositif d'entraînement pour donner un mouvement de translation selon deux directions opposées afin de faire passer, par couplage mécanique, le bras de la position bras baissé à la position bras tendu et vice versa, un premier, un deuxième et un troisième axe de rotation perpendiculaires aux plans parallèles et servant respectivement d'axes de rotation à la première extrémité de la bielle, à la seconde extrémité de la bielle et à la première extrémité du bras, et au bras en un point du bras situé à une distance donnée de sa première extrémité.

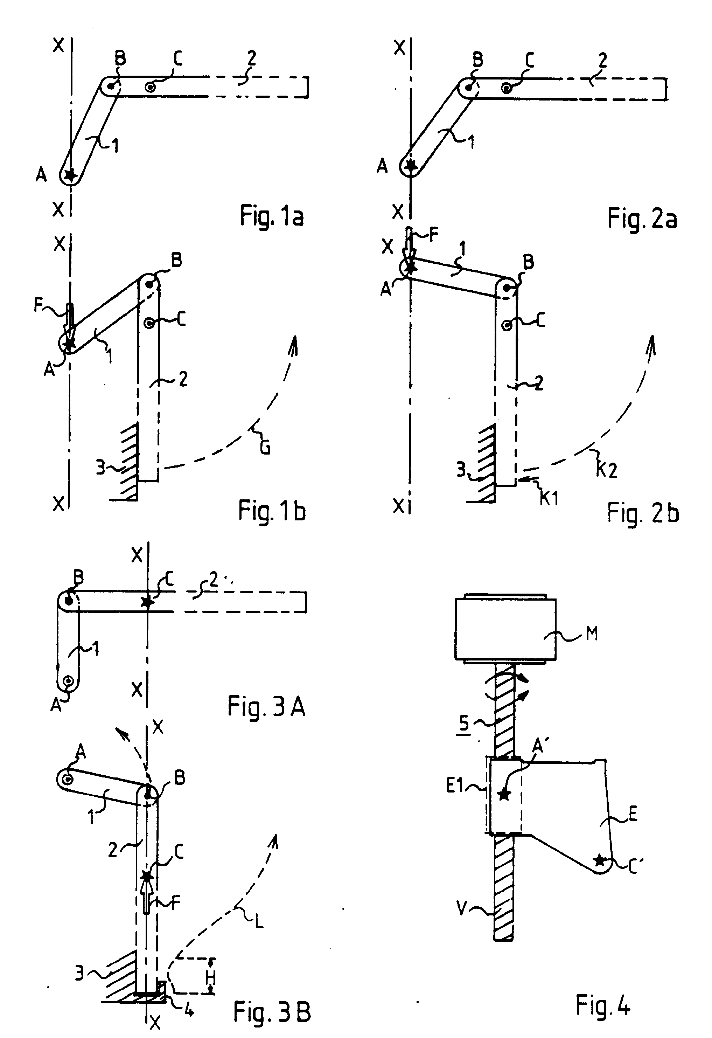

De tels mécanismes sont connus et un exemple de réalisation d'un de ces mécanismes connus sera donné à l'aide des figures 1a et 1b. Comme il sera vu lors de la description de ces figures, les mécanismes connus entraînent un simple pivotement du bras entre deux positions extrêmes, bras baissé, bras tendu, sans assurer un maintien fiable dans la position bras baissé ; or il s'avère que, dans certaines applications, pour des raisons de protection du matériel soumis à des conditions d'environnement sévères, il est intéressant d'avoir un bon blocage du bras en position baissée, c'est-à-dire un blocage capable de résister aux vibrations, voire même à des tiraillements latéraux.

La présente invention a pour but d'éviter ou, pour le moins, de réduire ces inconvénients des mécanismes connus.

Ceci est obtenu, en particulier, en donnant aux trois axes des degrés de liberté différents de ceux qu'ils ont dans les mécanismes connus.

Selon l'invention un mécanisme comportant un support, un bras, une bielle, le bras et la bielle étant mobiles dans des plans parallèles, un dispositif d'entrainement solidaire du support pour donner un mouvement de translation selon deux directions opposées afin de faire passer, par couplage mécanique, le bras d'une première position sensiblement parallèle aux directions opposées, à une seconde position sensiblement perpendiculaire aux directions opposées et vice versa, un premier, un deuxième et un troisième axe de rotation perpendiculaires aux plans parallèles et servant respectivement d'axes de rotation à la première extrémité de la bielle, à la seconde extrémité de la bielle et à la première extrémité du bras, et au bras en un point du bras situé à une distance donnée de sa première extrémité, est caractérisé en ce que le premier axe est fixe par rapport au support, en ce que le mouvement de translation est appliqué au troisième axe perpendiculairement à cet axe, et en ce que, dans la première position, le bras et la bielle forment un angle obtus.

La présente invention sera mieux comprise à l'aide de la description ci-après et des figures s'y rapportant qui représentent :
- les figures 1a-1b, deux schémas d'un mécanisme selon l'art connu,
- les figures 2a-2b, deux schémas d'un mécanisme amélioré par rapport à celui selon les figures 1a-1b,
- les figures 3a-3b, deux schémas d'un mécanisme selon l'invention ;
- la figure 4, un schéma d'un dispositif d'entraînement utilisable dans les mécanismes selon les figures précédentes ;
- les figures 5a à 5b, des schémas détaillés d'un mécanisme selon l'invention.

Sur les différentes figures les éléments correspondants sont désignés par les mêmes repères.

Les figures 1a, 2a, 3a sont des schémas montrant des mécanismes du type bras articulé en position bras tendu et les figures 1b, 2b, 3b des schémas montrant les mêmes mécanismes mais en position bras baissé. Par convention, sur ces figures, les axes de rotation fixes sont représentés par un point noir entouré d'un cercle, les axes à un seul degré de liberté sont représentés par une étoile et les autres axes sont représentés par un simple point noir. Dans tous ces schémas la droite dans le plan du dessin selon laquelle se déplacent les axes à un seul degré de liberté a été dessinée et repérée XX ; quant à la direction de la force qui détermine ce déplacement pour passer de la position bras baissé à la position bras tendu, elle a été symbolisée par une grosse flèche, F, qui aboutit sur le point à un degré de liberté. A noter de plus que tous les axes de rotation représentés sur les figures 1a à 3b sont perpendiculaires au plan du dessin.

Les figures 1a et 1b montrent, dans deux positions extrêmes, un mécanisme qui comporte un bras mécanique 2 articulé à l'une de ses extrémités, sur une extrémité d'une bielle 1, par un axe de rotation B ; le bras et la bielle sont mobiles dans des plans parallèles au plan de la figure. L'autre extrémité de la bielle peut tourner autour d'un axe de rotation A qui présente un degré de liberté, étant donné que ses déplacements sont limités à des translations selon la droite XX ; un dispositif d'entraînement, dont un schéma est donné à la figure 4, détermine ces déplacements. Le bras 2 peut tourner autour d'un axe fixe C qui se trouve au voisinage de l'extrémité du bras articulée sur la bielle mais un peu plus éloigné que B de cette extrémité.

La figure 1b montre le mécanisme en position bras baissé, c'est-à-dire que le bras 2 est parallèle à XX ce qui, dans l'exemple décrit, correspond au bras en position verticale avec l'axe B en haut du bras. Dans cette position le bras appuie par son extrémité libre contre une paroi du support 3 qui constitue la partie fixe du mécanisme, partie dont sont solidaires la droite XX et l'axe C ; il est à noter que la bielle et le bras forment alors un angle aigu d'environ 45 degrés et que le plan de la paroi sur lequel s'appuie le bras 2 est parallèle au plan de trace XX dans lequel se déplace l'axe A. Par translation de l'axe A vers le bas, le bras 2 pivote autour de son axe fixe et vient en position bras tendu en décrivant un arc de cercle d'environ 90 degrés, comme symbolisé par la flèche G.

La figure 1a montre le bras et la bielle en position bras tendu, c'est-à-dire avec le bras perpendiculaire à l'axe XX.

Il est à noter qu'il est connu par la demande de brevet allemande publiée 2 249 761, avec priorité suédoise du 19 octobre 1971, de réaliser un mécanisme qui correspond à celui des figures 1a et 1b à une différence de but et de forme près : le bras 2 du présent document est remplacé par une simple bielle qui relie les axes B et C et, à partir du mouvement de translation selon XX, le but n'est pas de déplacer un bras (2) mais d'obtenir un mouvement de rotation autour d'un axe (C).

Les figures 2a-2b montrent comment le mécanisme selon les figures 1a, 1b peut être amélioré en modifiant simplement l'angle que font, en position bras baissé, la bielle et le bras ; comme le montre la figure 2b le mécanisme ne diffère de celui des figures 1a-1b que par le fait que la bielle et le bras ne font plus un angle aigu mais un angle obtus quand le bras est baissé. Cet angle qui est légèrement supérieur à 90 degrés fait que, lorsque la bielle est déplacée vers le bas de l'axe XX sous l'action de la force F, le bras tourne autour de l'axe fixe C, d'abord avec son extrémité libre qui est poussée vers le support 3 jusqu'au moment où la bielle passe par l'horizontale ; puis le bras se lève pour atteindre la position bras tendu représentée sur la figure 2a ; des flèches K1 et K2 symbolisent, dans la figure 2b, ce mouvement à deux sens successifs. Il est à remarquer que, en position bras baissé, l'extrémité libre du bras appuie sur le support 3 si bien que lorsqu'elle est poussée, comme indiqué par la flèche K1, vers le support 3, elle ne fait qu'appuyer plus fortement sur le support tandis que le bras se plie légèrement. Ainsi, en sens inverse, quand le bras est amené de la position bras tendu à la position bras baissé, peu avant de s'immobiliser il passe par un "point dur" c'est-a-dire jar une position transitoire où la pression qu'il exerce sur le support 3 atteint une valeur maximale. Ce "point dur" et la position en "arc-boutant" qu'occupe la bielle 1 par rapport au bras 2, quand ce dernier est baissé, assurent un maintien plus sûr du bras en position baissée qu'avec le dispositif selon les figures 1a- 2b.

Les figures 3a-3b montrent un mécanisme avec une bielle, 1, et un bras, 2, articulé sur la bielle, qui s'apparente à celui selon les figures 2a-2b par l'angle obtus que forment la bielle et le bras en position bras baissé mais qui en diffère notablement par le rôle que jouent les axes de rotation A et C, l'axe A devenant fixe et l'axe C devenant l'axe soumis au mouvement de translation suivant XX. Pour lever le bras 2, le mouvement de translation, repéré par la flèche F sur la figure 3b, tend à entraîner l'extrémité libre du bras 2 sur un trajet symbolisé par la courbe flèchée L de la figure 3b. Tant que la bielle 2 est proche de la perpendiculaire à XX et s'il n'y avait pas une paroi du support 3 du mécanisme pour l'en empêcher, l'extrémité libre du bras 2 décrirait, sur une hauteur H, une trajectoire vers le haut qui, dans un premier temps, l'écarterait légèrement de la droite XX, du côté du demi-plan limité à cette droite et contenant l'axe fixe A et qui, dans un deuxième temps, après le passage de la bielle 1 en position horizontale, le ramènerait vers la droite XX ; du fait de la présence de la paroi du support 3 sur laquelle appuie le bras 2 en position baissée, l'extrémité du bras 2 ne peut que glisser verticalement vers le haut, sur la longueur H, avec passage par un "point dur" au moment où la bielle 1 est horizontale ; pendant ce mouvement de translation de son extrémité libre le bras plie légèrement. Puis, la bielle continuant à tourner, l'extrémité libre du bras décrit effectivement le reste de la trajectoire L pour se terminer dans la position bras tendu représentée à la figure 3a. Ainsi le mécanisme selon les figures 3a-3b présente les mêmes avantages que celui selon les figures 2a-2b : "point dur" juste avant que le bras soit totalement baissé et position en "arc-boutant" de la bielle par rapport au bras quand ce dernier est baissé. Le mécanisme selon les figures 3a-3b présente un avantage supplémentaire, comme il apparaît sur la figure 3b ; en effet le mouvement de translation verticale qu'effectue, sur la hauteur H l'extrémité libre du bras 2 permet de faire passer cette extrémité derrière un rebord de protection, 4, solidaire du support 3 et d'assurer ainsi, avec une sécurité renforcée, le maintien en position bras baissé.

La figure 4 montre une réalisation d'un dispositif d'entraînement, 5, permettant d'assurer le mouvement de translation selon XX dont il a été question lors des descriptions des figures précédentes. Le dispositif 5 comporte un moteur M dont l'axe V est constitué par une vis sans fin qui tourne dans un écrou glissant dans un rail, non représenté, parallèle à l'axe du moteur, et qui est couplé à un des mécanismes selon les figures précédentes par l'axe de rotation à un degré de liberté de ce mécanisme. Dans le cas des mécanismes selon les figures 1a-1b et 2a-2b le couplage se fait avec l'axe A au plus proche de l'axe V du moteur ; une pièce E1 dessinée en traits interrompus sur la figure 4 et qui comporte un point A' de couplage avec l'axe A, sert d'écrou. Dans le cas du mécanisme selon les figures 3a-3b, pour éviter que le dispositif d'entraînement déborde du support, l'écrou est constitué par une pièce E, qui présente un point de couplage C' avec l'axe C du bras des figures 3a-3b; ce point de couplage C' est décalé par rapport à l'axe V du moteur de manière que le moteur puisse être disposé tout entier sur la gauche de l'axe XX des figures 3a-3b, c'est-à-dire bien à l'intérieur du support 3 représenté partiellement sur la figure 3b.

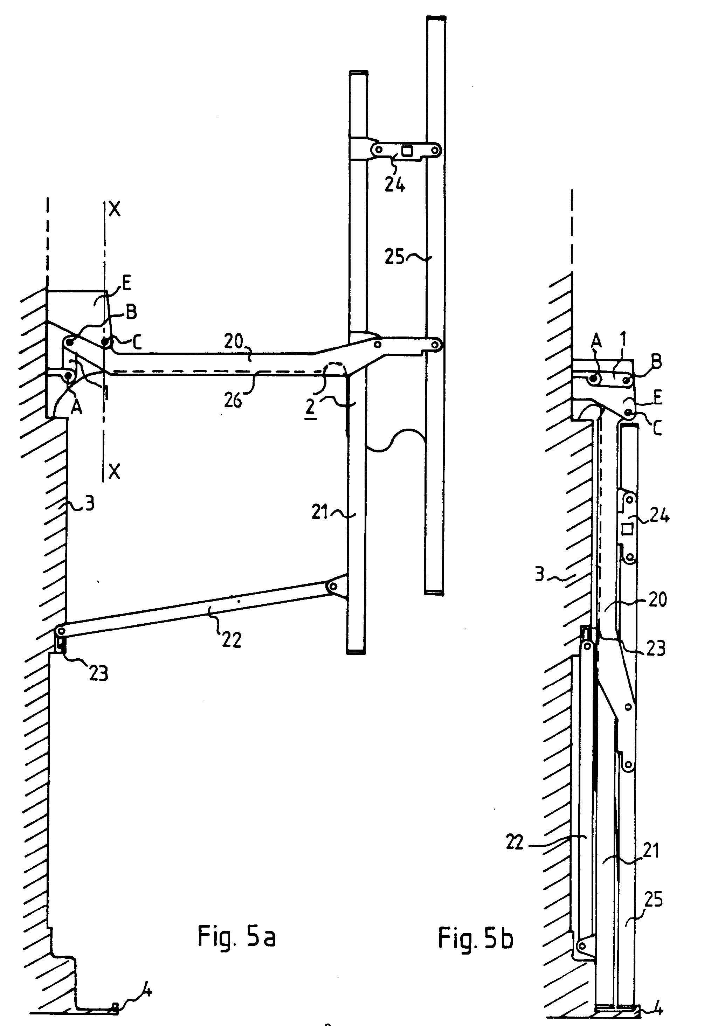

Les figures 5a-5b sont des schémas détaillés d'une réalisation d'un mécanisme du genre de celui représenté sur les figures 3a, 3b, appliqué à une antenne de sonar; le mécanisme est montré avec le bras en position tendue sur la figure 5a et en position baissée sur la figure 5b. Sur ces figures la paroi du support 3 a été représentée dans toute sa partie voisine du bras articulé et en particulier là où se trouvent le rebord de protection 4 et le point de fixation A' de l'axe A dont il a été question dans la description des figures 3a, 3b et 4. Sur ces figures apparaissent toutes les pièces déjà décrites dans les figures 3a et 3b et leurs rôles restent identiques ; mais le bras 2 n'est pas, ici, constitué par une simple barre, il présente, en effet, une barre porteuse, 20, articulée vers sa première extrémité sur les axes B et C et qui constitue vers sa seconde extrémité l'un des petits côtés d'un parallélogramme déformable dont les deux grands côtés sont constitués par des barreaux 21, 25 à l'intérieur desquels sont disposés des hydrophones ; l'autre petit côté du parallélogramme est constitué par une biellette 24. De manière à maintenir constante la direction des barreaux, quelle que soit la position de la barre porteuse par rapport au support, une barre annexe 22 est articulée à l'une de ses extrémités sur un axe perpendiculaire au plan du dessin et prisonnier d'un trou oblong 23 parallèle à XX et pratiqué dans le support 3 ; à l'autre de ses extrémités la barre annexe 22 est articulée sur le barreau 21 ; le trou oblong est destiné à permettre le mouvement de translation verticale que subit le bras quand il est abaissé, comme cela a été décrit à l'aide des figures 3a et 3b ; il est à noter que dans la position bras baissé c'est l'extrémité inférieure des barreaux 21, 25 qui se trouve derrière le rebord 4.

La figure 5a montre également un câble électrique 26 qui relie les hydrophones des barreaux 21, 25 aux circuits électroniques contenus dans le support 3, ce support 3 étant, dans l'exemple décrit, le corps d'une antenne de sonar autour duquel sont régulièrement répartis douze mécanismes identiques au mécanisme selon les figures 5a, 5b.

La présente invention n'est pas limitée aux exemples décrits mais concerne tout dispositif comportant une bielle et un bras articulé comme sur les figures 3a, 3b, même si le support, 3, ne comporte pas de rebord, 4, ou même si le bras, 2, comporte un crochet qui, sur la figure 3b, serait disposé sur la gauche et tourné vers le bas et viendrait s'engager dans une cavité percée dans la paroi du support, 3, et protégée, à sa partie inférieure, par un rebord ne formant pas excroissance sur la paroi du support.

De même le bras 2 peut ne comporter qu'une barre comme sur les figures 3a, 3b, les hydrophones étant alors logés dans cette barre. Ou bien le bras, au lieu de comporter deux barreaux comme sur les figures 5a, 5b, peut ne comporter qu'un seul barreau, par exemple le barreau 21 des figures 5a, 5b ou bien peut comporter plus de deux barreaux à condition que ces barreaux forment entre eux des parallélogrammes déformables.

**Revendications**

1. Mécanisme comportant un support (3), un bras (2), une bielle (1), le bras et la bielle étant mobiles dans des plans parallèles, un dispositif d'entraînement (5) solidaire du support pour donner un mouvement de translation selon deux directions opposées (XX) afin de faire passer, par couplage mécanique, le bras d'une première position sensiblement parallèle aux directions opposées (figures 3b, 5b), à une seconde position sensiblement perpendiculaire aux directions opposées (figures 3a, 5a) et vice versa, un premier (A), un deuxième (B) et un troisième axe de rotation (C) perpendiculaires aux plans parallèles et servant respectivement d'axes de rotation à la première extrémité de la bielle, à la seconde extrémité de la bielle et à la première extrémité du bras, et au bras en un point du bras situé à une distance donnée de sa première extrémité, caractérisé en ce que le premier axe (A) est fixe par rapport au support (3), en ce que le mouvement de translation (F) est appliqué au troisième axe (C) perpendiculairement à cet axe, et en ce que, dans la première position, le bras (2) et la bielle (1) forment un angle obtus.

2. Mécanisme selon la revendication 1, caractérisé en ce qu'il comporte un rebord (4) solidaire du support (3) et disposé de manière à empêcher d'écarter le bras du support perpendiculairement aux directions opposées quand le bras est dans la première position.

3. Mécanisme selon l'une quelconque des revendications précédentes, caractérisé en ce qu'il comporte un trou oblong (23) percé dans le support (3) et parallèle aux directions opposées (XX), et un quatrième axe de rotation, qui est perpendiculaire aux plans parallèles et qui est prisonnier du trou oblong, en ce que le bras (2) comporte une barre porteuse (20) dont la première extrémité constitue la première extrémité du bras, un barreau de maintien (21) et une barre annexe (22), la barre annexe étant mobile à sa première extrémité autour du quatrième axe de rotation et en ce que le barreau de maintien (21) est articulé sur les secondes extrémités de la barre porteuse (20) et de la barre annexe (22).

4. Mécanisme selon la revendication 3, caractérisé en ce que le bras comporte n (n entier au moins égal à 1) barreaux annexes (25) articulés sur la barre porteuse (20) et couplés mécaniquement au barreau de maintien (21) pour former des parallélogrammes déformables avec le barreau de maintien.

5. Antenne de sonar caractérisée en ce qu'elle est équipée d'un mécanisme selon l'une quelconque des revendications précédentes.

**Patentansprüche**

1. Mechanismus mit einem Träger (3), einem Arm (2) und einer Schwenkstange (1), wobei Arm und Schwenkstange in parallelen Ebenen beweglich sind, mit einer Antriebsvorrichtung (5), die am Träger befestigt ist, um eine Translationsbewegung in zwei einander entgegengesetzten Richtungen (XX) zu liefern, um den Arm durch mechanische Kopplung aus einer ersten, im wesentlichen zu den entgegengesetzten Richtungen parallelen Lage (Figur 3b, Figur 5b) in eine zweite, im wesentlichen zu den beiden entgegengesetzten Richtungen senkrechte Lage (Figuren 3a, 5a) und umgekehrt zu bringen, mit einer ersten (A), einer zweiten (B) und einer dritten Drehachse (C), die zu den parallelen Ebenen senkrecht verlaufen und als Drehachsen für das erste Ende der Schwenkstange bzw. das zweite Ende der Schwenkstange bzw. das erste Ende des Arms sowie für den Arm in einem Punkt des Arms dienen, der einen gegebenen Abstand zum ersten Ende besitzt, dadurch gekennzeichnet, daß die erste Achse (A) bezüglich des Trägers (3) fest ist, daß die Translationsbewegung (F) der dritten Achse (C) senkrecht zu dieser Achse verliehen wird und daß der Arm (2) und die Schwenkstange (1) in der ersten Lage einen stumpfen Winkel bilden.

2. Mechanismus nach Anspruch 1, dadurch gekennzeichnet, daß am Träger (3) eine Kante (4) vorgesehen und so angebracht ist, daß sie eine Entfernung des Arms vom Träger senkrecht zu den einander entgegengesetzten Richtungen verhindert, wenn der Arm sich in der ersten Lage befindet.

3. Mechanismus nach einem beliebigen der vorhergehenden Ansprüche, dadurch gekennzeichnet, daß er ein im Träger (3) vorgesehenes Langloch (23), das parallel zu den einander entgegengesetzten Richtungen (XX) verläuft, und eine vierte Drehachse besitzt, die senkrecht zu den parallelen Ebenen liegt und im Langloch geführt wird, daß der Arm (2) eine Tragstange (20), deren erstes Ende das erste Ende des Arms bildet, eine Haltestange (21) und eine weitere Stange (22) aufweist, wobei die weitere Stange mit ihrem ersten Ende um die vierte Drehachse beweglich montiert ist, und daß die Haltestange (21) mit den zweiten Enden der Tragstange (20) und der weiteren Stange (22) gelenkig verbunden ist.

4. Mechanismus nach Anspruch 3, dadurch gekennzeichnet, daß der Arm n weitere Stangen (25) (n ist eine positive ganze Zahl) aufweist, die an der Tragstange (20) angelenkt und mechanisch mit der Haltestange (21) gekoppelt sind, um verformbare Parallelogramme mit der Haltestange zu bilden.

5. Sonarantenne, dadurch gekennzeichnet, daß sie mit einem Mechanismus nach einem beliebigen der vorhergehenden Ansprüche ausgerüstet ist.

**Claims**

1. A mechanism comprising a support (3), an arm (2), a connecting rod (1), the arm and the connecting rod being moveable in parallel planes, a drive device (5) integral with the support to give a movement in translation in two opposite directions (XX) in order to make the arm move, by mechanical coupling, from a first position substantially parallel to the opposite directions (Figures 3b, 5b) to a second position substantially perpendicular to the opposite directions (Figures 3a, 5a) and vice versa, a first (A), a second (B) and a third (C) axis of rotation perpendicular to the parallel planes and serving respectively as axes of rotation at the first end of the connecting rod, at the second end of the connecting rod and the first end of the arm, and on the arm at a point on the arm located at a given distance from its first end, characterised in that the first axis (A) is fixed relative to the support (3), in that the movement in translation (F) is applied to the third axis (C) perpendicular to that axis, and in that, in the first position, the arm (2) and the connecting rod (1) form an obtuse angle.

2. A mechanism according to Claim 1, characterised in that it comprises a lip (4) integral with the support (3) and disposed so as to prevent the arm of the support from being moved away perpendicularly to the opposite directions when the arm is in the first position.

3. A mechanism according to any one of the preceding claims, characterised in that it comprises an oblong hole (23) made in the support (3), parallel to the opposite directions (XX), and a fourth axis of rotation, which is perpendicular to the parallel planes and is imprisoned by the oblong hole, in that the arm (2) comprises a bearing rod (20), the first end of which constitutes the first end of the arm, a holding bar (21) and an ancillary rod (22), the ancillary rod being mobile at its first end around the fourth axis of rotation and in that the holding bar (21) is articulated to the second ends of the bearing rod (20) and the ancillary rod (22).

4. A mechanism according to Claim 3, characterised in that the arm comprises n (n being a whole number at least equal to 1) ancillary bars (25) articulated to the bearing rod (20) and mechanically coupled to the holding bar (21) so as to form deformable parallelograms with the holding bar.

5. A sonar aerial characterised in that it is fitted with a mechanism according to any one of the preceding claims.

Fig. 1a

Fig. 2a

Fig. 1b

Fig. 2b

Fig. 3 A

Fig. 3 B

Fig. 4

7

Fig. 5a  Fig. 5b